(19) Europäisches Patentamt
European Patent Office
Office européen des brevets

(11) Veröffentlichungsnummer: **0 199 090**
**B1**

(12) **EUROPÄISCHE PATENTSCHRIFT**

(45) Veröffentlichungstag der Patentschrift: **03.10.90**

(51) Int. Cl.⁵: **C 08 G 69/32**

(21) Anmeldenummer: **86103753.9**

(22) Anmeldetag: **19.03.86**

# (54) Geformte Gebilde aus aromatischen Copolyamiden und Verfahren zu ihrer Herstellung.

(30) Priorität: **23.03.85 DE 3510655**
**20.02.86 DE 3605394**

(43) Veröffentlichungstag der Anmeldung:
**29.10.86 Patentblatt 86/44**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**DE-A-2 556 883**
**DE-A-3 007 063**
**US-A-4 169 932**

**CHEMICAL ABSTRACTS, Band 85, Nr. 18, 1. November 1976, Seite 41, Zusammenfassung Nr. 124959u, Columbus, Ohio, US; & JP - A - 76 73597 (ASAHI CHEMICAL IND. CO., LTD.) 25.06.1976**

(73) Patentinhaber: **HOECHST AKTIENGESELLSCHAFT**
**Postfach 80 03 20**
**D-6230 Frankfurt am Main 80 (DE)**

(72) Erfinder: **Keil, Günter, Dr.**
**Frankfurter Strasse 60**
**D-6238 Hofheim am Taunus (DE)**
Erfinder: **Jakob, Franz, Dr.**
**Schlossstrasse 34**
**D-6238 Hofheim am Taunus (DE)**
Erfinder: **Warning, Klaus, Dr.**
**Kreuzheck 6**
**D-6239 Eppstein/Taunus (DE)**
Erfinder: **Herold, Friedrich, Dr.**
**Thüringer Weg 57**
**D-6238 Hofheim am Taunus (DE)**

**EP 0 199 090 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue, geformte Gebilde wie Fäden, Fasern, Faserpulp, Filme und Folien aus aromatischen Copolyamiden des Dicarbonsäure-Diamintyps sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet — beispielsweise zur Verstärkung von Kuntstoffen oder als Filtermaterialien.

Die Herstellung der dafür benötigten Polymeren erfolgt am günstigsten in bekannter Weise durch Umsetzung von aromatischen Diaminen mit aromatischen Dicarbonsäuredichloriden in aprotischen organischen Lösungsmittlen vom Amid-Typ (N,N-Dimethylacetamid, N-Methylpyrrolidon, N,N,N',N'-Tetramethylharnstoff und dgl.) — gegebenenfalls in Gegenwart von Calcium- oder Lithiumhalogeniden und Neutralisation des gebildeten Chlorwasserstoffs, beispielsweise mit Calciumoxid.

Fäden aus Polyaramiden mit hoher Festigkeit und hohem Anfangsmodul sind solche, bei denen die Amidbindungen koaxial oder nahezu parallel zueinander orientiert sind, wodurch starre, stäbchenförmige Polymermoleküle entstehen. Typische Polyamidfasern dieser Art bestehen beispielsweise aus Poly-(p-phenylenterephthalamid). Derartige Fäden sind beispielsweise in der Deutschen Patentschrift 22 19 703 beschrieben.

Dieses Produkt weist eine Reihe von Vorzügen auf, die Herstellung des benötigten Polyamids und seine Verarbeitung sind jedoch sehr schwierig. Beispielsweise wegen der schlechten Löslichkeit in polaren organischen Lösungsmitteln — und zwar auch in Gegenwart von anorganischen Salzen wie Calciumchlorid oder Lithiumchlorid als Lösungsvermittler — fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitgung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach einer hohen Verstreckung durch hohe Festigkeitswerte und Anfangsmoduli auszeichnen.

So wurde beispielsweise in der DE—A—21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht. In der Deutschen Patentschrift 25 56 883 und in der Deutschen Offenlegungsschrift 30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den vorgenannten Verfahren ist, daß die verschiedenen benötigten Amine nur in sehr aufwendigen Verfahren hergestellt und gereinigt werden können.

Der vorligenden Erfindung liegt daher die Aufgabe zugrunde, solche aromatischen Copolyamide zu finden, die sich unter Verwendung von Amidlösungsmitteln in geformte gebilde überführen lassen, die sich dann durch eine Reihe von physikalischen Eigenschaften auszeichnen. Bei der Herstellung von Fäden und Fasern sollen nach entsprechenden Verstreckungsvorgängen insbesondere hohe Festigkeiten und sehr hohe Anfangsmoduli erzielbar sein. Die für die Herstellung der Copolyamide benötigten Monomere sollen leicht zugänglich sein, die durch die Polykondensation erhaltenen Polymerlösungen sollen nach einem Filtrationsprozeß und einer entsprechenden Entlüftung direkt spinnbar bzw. formbar sein.

Die Lösung der Aufgabe wurde gefunden in neuartigen aromatischen Copolyamiden, die sich aus Lösungen in aprotischen Lösungsmitteln zu geformten Gebilden wie Fäden, Fasern, Faserpulp, Folien aber

auch Filmen verarbeiten lassen. Die dafür benötigten Copolyamide weisen wenigstens die folgenden wiederkehrenden Struktureinheiten auf:

A - OC - Ar - CO - sowie

B - NH - Ar' - NH -

C 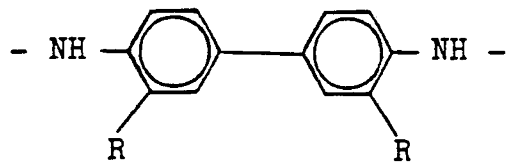 und

D 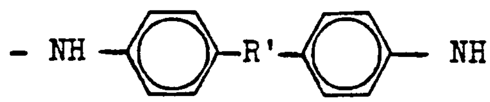

Dabei bedeuten

—Ar— und —Ar'— zweiwertige aromatische Reste, bei denen die Valenzbindungen in para- oder vergleichbarer koaxialer oder paralleler Stellung stehen,

—R einen niederen Alkylrest oder einen niederen Alkoxyrest mit jeweils bis zu 4 C-Atomen oder einen Halogenrest und

—R'— einen unsubstituierten oder substituierten Methylenrest oder eine Gruppierung —O—Ar—O—, wobei —Ar— den gleichen Aufbau wie oben angegeben aufweist.

Erfindungsgemäß sind also drei Diaminkomponenten zur Ausbildung des Copolyamides notwendig, wobei die Kettenvalenzbindungen an den einzelnen Benzolringen jeweils nur in para-Position oder entsprechender koaxialer bzw. paralleler Stellung stehen sollen. Die Menge der eingesetzten Diamine sind nicht beliebig wählbar, sondern nur innerhalb bestimmter Molprozentbereiche, bezogen auf die gesamte Molmenge an Diaminkomponenten. Der erfindungsgemäß erforderliche Konzentrationsbereich ist durch die folgenden Eckpunkte definiert, die Abrenzung des Bereiches ist auch grafisch in den beigefügten Figuren im Dreieckskoordinatensystem dargestellt worden. Die Eckpunkte des beanspruchten Bereiches weisen folgende Zuordnungen auf:

Punkt Q entsprechend 5 Mol-% B, 45 Mol-% C, 50 Mol-% D;
Punkt R entsprechend 45 Mol-% B, 5 Mol-% C, 50 Mol-% D;
Punkt S entsprechend 60 Mol-% B, 35 Mol-% C, 5 Mol-% D;
Punkt T entsprechend 20 Mol-% B, 75 Mol-% C, 5 Mol-% D;
Punkt U entsprechend 5 Mol-% B, 80 Mol-% C, 15 Mol-% D.

Bevorzugt gilt ein Bereich mit den Eckpunkten
Punkt Q' entsprechend 15 Mol-% B, 45 Mol-% C, 40 Mol-% D;
Punkt R' entsprechend 40 Mol-% B, 20 Mol-% C, 40 Mol-% D;
Punkt S' entsprechend 50 Mol-% B, 40 Mol-% C, 10 Mol-% D;
Punkt T' entsprechend 15 Mol-% B, 75 Mol-% C, 10 Mol-% D.

Diese Bereiche sind in der Figur 1 wiedergegeben. Besonders bevorzugt sind Bereiche mit den nachfolgend definierten Eckpunkten. Sie sind in der Figur 2 graphisch dargestellt.
Punkt W entsprechend 5 Mol-% B, 45 Mol-% C, 50 Mol-% D;
Punkt X entsprechend 45 Mol-% B, 5 Mol-% C, 50 Mol-% D;
Punkt Y entsprechend 45 Mol-% B, 40 Mol-% C, 15 Mol-% D;
Punkt Z entsprechend 5 Mol-% B, 80 Mol-% C, 15 Mol-% D.

Geformte Gebilde aus aromatischen Copolyamiden gemäß der vorliegenden Erfindung werden insbesondere dann mit hervorragenden Eigenschaften erhalten, wenn die einzelnen Anteile der Diaminkomponenten zur Gesamtmenge der Diaminkomponenten in Mol-% innerhalb eines engeren Bereiches liegen, der durch die folgenden Eckpunke definiert ist.
Punkt W' entsprechend 15 Mol-% B, 50 Mol-% C, 35 Mol-% D;
Punkt X' entsprechend 45 Mol-% B, 20 Mol-% C, 35 Mol-% D;
Punkt Y' entsprechend 45 Mol-% B, 40 Mol-% C, 15 Mol-% D;
Punkt Z' entsprechend 15 Mol-% B, 70 Mol-% C, 15 Mol-% D.

Auch dieser engere Bereich ist in der Figur 2 in Dreieckskoordinaten dargestellt.

Die inhärente Viskosität der formbildenden Copolyamide soll zwischen 2,4 und 6,5 dl/g liegen.

Bevorzugte Obergrenze der Viskosität 5,0 dl/g. Sie wurde bestimmt an Lösungen von jeweils 0,5 g Polymer in 100 ml 98 gew-%iger Schwefelsäure bei 25°C.

Unter inhärenter Viskosität wird der Ausdruck

$$\eta inh. = \frac{\ln \eta_{rel}}{c}$$ verstanden.

$\eta_{rel}$ bedeutet dabei die relative Viskosität, c die angewandte Konzentration in g/dl.

Die ausgezeichneten Eigenschaften der erfindungsgemäßen geformten Gebilde beruhen auf dem Einbau der Aminbausteine B, C, und D in den angegebenen Grenzen. Aromatische Polyamide mit einzelnen der Aminkomponenten B, C oder D sind allgemein bekannt. Sie zeigen keine überragenden Eigenschaften, wie aus den folgenden Schriften und den angestellten Vergleichsversuchen ersichtlich ist.

So ist z.B. die Verwendung der Aminkomponente B, d.h. z.B. p-Phenylendiamin, weitgehend bekannt und z.B. in der weiter oben zitierten Deutschen Patentschrift 22 19 703 beschrieben. Wie bereits oben ausgeführt, sind Polyamide, die nur diesen Aminbaustein zusammen mit einem aromatischen Dicarbonsäurerest aufweisen, in aprotischen Lösungsmitteln vom Amidtyp praktisch nicht mehr löslich. Eine Spinnlösung kann jedoch unter Verwendung von konzentrierter Schwefelsäure erhalten werden (DE—A—19 29 713).

Der gleichen Vorliteratur kann auch die Eignung von Benzidinen als aromatische Polyamidkomponente entnommen werden. Eine Spinnlösung ist unter Einsatz von rauchender Schwefelsäure möglich.

Die Verwendung von Aminkomponenten der Struktur D zur Herstellung von Polyamiden ist ebenfalls mehrfach beschrieben worden. Diaminkomponenten mit einer gegebenenfalls substituierten Methylenbrücke werden bereits in der DE—C—22 19 703 genannt. Auch der Gebrauch von aromatischen Diaminen mit zwei Äthergruppen ist bereits bekannt, beispielsweise aus der DE—A—15 95 681. Die Herstellung von Diaminen mit zwei Äthergruppen wird beispielsweise auch in Liebigs Ann. Chem. *740* (1970), 169 ff. beschrieben. Wie sich aus den genannten Schriften und insbesondere den angestellten Vergleichsversuchen ergibt, weisen aus organischen Lösungen gesponnene Filamente der betreffenden Polyamide durchweg nur mäßige Eigenschaften auf, während Filamente aus Copolyamiden, die nach der vorliegenden Erfindung durch Verwendung von Gemischen der Aminkomponenten B + C + D in bestimmten Anteilen hergestellt wurden, sich überraschenderweise durch hohe Festigkeit und hohen Anfangsmodul auszeichnen.

Zur Herstellung der erfindunggemäß benötigten Copolyamide sind die folgenden Verbindungen geeignet:

Als Dicarbonsäurederivate der Formel

$$Cl—CO—Ar—CO—Cl \qquad A'$$

sind beispielsweise geeignet, 4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, ganz besonders aber Terephthalsäuredichlorid.

Als aromatisches Diamin der Struktur

$$H_2N—Ar'—NH_2 \qquad B'$$

eignet sich insbesondere p-Phenylendiamin.

Als Benzidinderivate C' der Formel

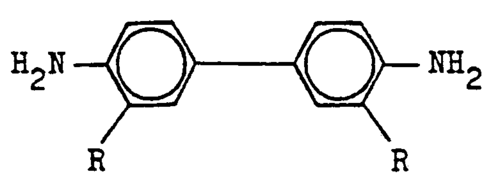

C'

eignen sich besonders das 3,3'-Dimethoxy-, das 3,3-Dichlor- und ganz besonders das 3,3'-Dimethylbenzidin.

Von der Diaminkomponente D' der Formel

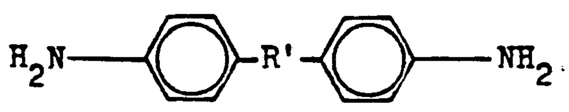

D'

seien besonders das 4,4'-Diaminodiphenylmethan, das 2,2-bis-(4-Aminophenyl)-propan und ganz besonders das 1,4-bis-(4-Aminophenoxy)-benzol genannt.

Die Lösungskondensation der aromatischen Dicarbonsäuredichloride mit den Mischungen aus aromatischen Diaminen erfolgt in aprotischen, polaren Lösungsmitteln vom Amidtyp, wie z.B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Die Polykondensationstemperaturen liegen üblicherweise zwischen −20°C und +120°C, bevorzugt zwischen +10°C und +100°C. Besonders gute Ergebnisse werden bei Reaktionstemperaturen zwischen +10°C und +80°C erzielt. Die Polykondensationsreaktionen werden vorzugsweise so ausgeführt, daß nach Abschluß der Reaktion 2 bis 15, vorzugsweise 3,5 bis 10 Gew.-% an Polykondensat in der Lösung vorliegen. Wenn der Anteil der Komponente "D" sich 10% nähert, muß die Polymerkonzentration in der Lösung deutlich herabgesetzt werden.

Die Polykondensation kann in üblicher Weise z.B. durch Zugabe von monofunktionellen Verbindungen, wie z.B. Benzoylchlorid gestoppt werden.

Nach Beendigung der Polykondensation, d.h. wenn die Polymerlösung die zur Weiterverarbeitung erforderliche Viskosität erreicht hat, wird der entstandene und locker an das Amidlösungsmittel gebundene Chlorwasserstoff neutralisiert durch Zugabe basischer Substanzen. Geeignet sind dafür beispielsweise Lithiumhydroxyd, Calciumhydroxyd, insbesondere aber Calciumoxid. Zur Herstellung von geformten Gebilden gemäß der vorliegenden Erfindung werden die oben beschriebenen erfindungsgemäßen Polyamidlösungen filtriert, entgast und in bekannter — hier nicht beanspruchter — Weise zu Fäden, Fasern, Faserpulp, Filmen oder auch Folien weiterverarbeitet. Dies kann beispielsweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Polymerherstellung Verewendung gefunden hat. Es sind aber auch wäßrige Salzlösungen wie z.B. Calciumchloridlösungen verwendbar.

Bei der Herstellung von Fäden und Fasern sowie Folien setzt sich die Gesamtverstreckung zusammen aus einer geringen Naßverstreckung und einer Höheren Kontaktverstreckung. Zur Kontaktverstreckung werden z.B. die Filamente über heiße Platten ("Bügeleisen") gezogen, die Oberflächentemperaturen von 280°C bis 450°C, bevorzugt 320°C bis 420°C aufweisen, und dabei im Verhältnis 1:5 bis ca. 1:20, bevorzugt 1:8 bis 1:15, verstreckt. Bei einem Gehalt an "D" unter 20% genügen bereits Verstreckverhältnisse von 1:2 oder mehr, vorzugsweise 1:4 bis 1:7.

Eine ebenfalls geeignete Variante des Spinnverfahrens ist das sogenannte "Trockendüsen-Naßspinnverfahren", wie es beispielsweise in der US—A—34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationbad ein. Die weitere Behandlung der so erzeugten Fäden erfolgt wie oben beschrieben. Die aus den erfindungsgemäßen Rohstoffen hergestellten Formkörper, wie z.B. Fasern, Filamente, Faserpulp oder Folien, dienen beispielsweise als Verstärkungsmaterialien für Kunststoffe bzw. als technische Materialien für Filtration und Isolation. Für Isolationszwecke ist es auch möglich, eine Polymerlösung auf einen andern Körper als Film aufzutragen und dann eine Entfernung des Lösungsmittels und der gegebenenfalls anwesenden Lösungsvermittler vorzunehmen.

Zur weitern Verdeutlichung der Erfindung sollen die nachfolgenden Beispiele dienen. Die Anteile an Dicarbonsäurekomponenten und Diaminkomponenten wurden jeweils zu 100 Mol-% berechnet. Die inhärenten Viskositäten wurden wie bereits oben angegeben bestimmt.

### Beispiel 1

Aromatisches Copolyamid aus 100 Mol-% Terephthaloylchlorid, 50 Mol-% 3,3'-Dimethylbenzidin, 25 Mol-% 4,4'-Diaminodiphenylmethan und 25 Mol-% p-Phenylendiamin

42,4 g (0,2 Mol) 3,3'-Dimethylbenzidin, 19,8 g (0,1 Mol) 4,4'-Diaminodiphenylmethan, 10,8 g (0,1 Mol) p-Phenylendiamin, 4,2 g Calciumchlorid und 4,2 g Lithiumchlorid wurden unter Stickstoff in 1754 g N-Methylpyrrolidon gelöst und zwischen 12°C und 67°C innerhalb von 65 Minuten 82,4 g (0,406 Mol) Terephthaloylchlorid zugegeben. Die viskose Lösung wurde 40 Minuten lang bei 68°C nachgerührt und mit 24,5 g Calciumoxid (96%ig) neutralisiert und weitere 30 Minuten bei 70°C nachgerührt.

Die Lösung enthielt 6,5% Copolyamid, 2,5% Calciumchlorid und 0,22% Lithiumchlorid. Das gelöste Polyamid hatte eine inhärente Viskosität von 3,41.

Die Lösung wurde filtriert, entgast und naß versponnen. Dazu wurde sie aus einer Düse mit 50 Öffnungen von jeweils 0,1 mm Durchmesser in ein waagrecht angeordnetes Koagulationsbad, bestehend aus einer 60°C warmen Lösung von 35% N-Methylpyrrolidon in Wasser, mit einer Geschwindigkeit von 8,2 m/min ausgesponnen. Die erhaltenen Fäden wurden durch zwei Wasserbäder, eine Waschmaschine, über eine Trockengalette und schließlich über ein Bügeleisen der Temperatur von 367°C mit einer Geschwindigkeit von 79,5 m/min abgezogen.

Der Einzelfilamenttiter betrug 1,58 dtex bei einer Feinheits-Festigkeit von 135 cN/tex, einer Dehnung

von 3,2% und einem Anfangsmodul von 5315 cN/tex, bezogen auf 100% Dehnung. Der Anfangsmodul wurde dabei in allen Beispielen aus dem Kraft-Dehnungsdiagramm gewonnen und auf eine Dehnung von 100% normiert.

Vergleichsversuch 1

Aromatisches Copolyamid aus 100 Mol-% Terephthaloylchlorid, 50 Mol-% 3,3'-Dimethylbenzidin und 50 Mol-% p-Phenylendiamin

42,4 g (0,2 Mol) 3,3'-Dimethylbenzidin, 21,6 g (0,2 Mol) p-Phenylendiamin, 4,2 g Calciumchlorid und 4,2 g Lithiumchlorid wurden unter Strickstoff in 1625 g N-Methylpyrrolidon gelöst. Zwischen 12°C und 60°C wurden innerhalb von 30 Minuten 81,9 g (0,403 Mol) Terephthaloylchlorid eingetragen. Nach 60 Minuten Nachrühren wurde neutralisiert mit 24,5 g Calciumoxid (96%ig). Die Lösung wurde heterogen und war nicht spinnbar.

Vergleichsversuch 2

Aromatische Copolyamid aus 100 Mol-% Terephthaloylchlorid, 50 Mol-% 4,4'-Diaminodiphenylmethan und 50 Mol-% p-Phenylendiamin

79,2 g (0,4 Mol) 4,4'-Diaminodiphenylmethan und 43,2 g (0,4 Mol) p-Phenylendiamin wurden in 3450 g N-Methylpyrrolidon gelöst. Man setzte innerhalb von 100 Minuten bei Temperaturen, die von 19°C auf 78°C anstiegen, mit 163,2 g (0,804 Mol) Terephthaloylchlorid um. Nach dem Neutralisieren mit 49,0 g Calciumoxid (96%ig) wurden 140 Minuten lang bei 70—80°C gerührt.

Die Lösung enthielt 6,0% Polyamid und 2,36% Calciumchlorid, das Polyamid zeigte eine inhärente Viskosität von 3,25.

Die filtrierte und entgaste Lösung wurde durch eine 200 Loch-Düse mit Lochdurchmessern von je 0,09 mm in ein 60°C warmes Fällbad, bestehend aus einer 35%igen Lösung von N-Methylpyrrolidon in Wasser, gesponnen.

Nachwaschen, Trocknen und Verstrecken auf einem Bügeleisen von 430°C auf das 6,35-fache lieferte Filamente mit Einzelfilamenttitern von 1,13 dtex, einer Feinheits-Festigkeit 91 cN/tex, Dehnung von 5,7% und einen Anfangsmodul von 1988 cN/tex, bezogen auf 100% Dehnung.

Vergleichsversuch 3

Aromatisches Copolyamid aus 100 Mol-% Terephthaloylchlorid, 43,75 Mol-% 4,4'-Diaminodiphenylmethan und 56,25 Mol-% p-Phenylendiamin

In der gleichen Weise wie in Vergleichsversuch 2 beschrieben wurden umgesetzt: 69,3 g (0,35 Mol) 4,4'-Diaminodiphenylmethan, 48,6 g (0,45 Mol) p-Phenylendiamin, 9,3 g Calciumchlorid und 9,3 g Lithiumchlorid in 3723 g N-Methylpyrrolidon mit 163,6 g (0,806 Mol) Terephthaloylchlorid.

Bei Erreichen der gewünschten Viskosität wurde die Polykondensation abgestoppt durch Zusatz von 2,2 g Benzoyl chlorid und anschließend mit 49,0 g Calciumoxid (96%ig) neutralisiert.

Es wurde eine Lösung, die 5,5% Copolymer, 2,4% Calciumchlorid und 0,23% Lithiumchlorid enthält, erhalten. Das Copolymer hatte eine inhärente Viskosität von 2,90.

Gesponnen wurde durch eine 50-Loch-Düse mit Lochdurchmessern von 0,1 mm in eine 38%ige N-Methylpyrrolidonlösung von 60°C. Es wurde gewaschen, getrocknet und bei 418°C auf das 5,4-fache verstreckt. Es wurden Fäden mit Einzelfilamenttiter von 1,62 dtex, einer Festigkeit von 60 cN/tex, einer Dehnung von 3,7% und einem Anfangsmodul von 2163 cN/tex erhalten.

Beispiel 2

Aromatisches Copolyamid aus 100 Mol-% Terephthaloylchlorid, 60 Mol-% 3,3'-Dimethoxybenzidin, 20 Mol-% 4,4'-Diaminodiphenylmethan und 20 Mol-% p-Phenylendiamin

58,56 g (0,24 Mol) 3,3'-Dimethoxybenzidin, 15,84 g (0,08 Mol) 4,4'-Diaminodiphenylmethan, 8,65 g (0,08 Mol) p-Phenylendiamin, 10,3 g Calciumchlorid und 10,3 g Lithiumchlorid wurden unter Stickstoff in 2050 g N-Methylpyrrolidon gelöst.

Innerhalb von 90 Min. wurden bei Temperaturen, die von 8°C auf 69°C anstiegen, 82,0 g (0,404 Mol) Terephthaloylchlorid eingetragen. Die Neutralisation erfolgte mit 24,5 g Calciumoxid (96%ig). Das Nachrühren der viskosen Lösung bei 72°C dauerte 45 Min.

Die Lösung enthielt 6,0% Polyamid, 2,43% Calciumchlorid und 0,46% Lithiumchlorid. Das Copolyamid hatte eine inhärente Viskosität von 4,55.

Die erhaltene Lösung wurde nach dem Filtrieren und Entgasen nach einem Naßspinnprozeß durch eine 40-Loch-Düse mit Lochdurchmessern von 0,15 mm in ein Koagulationsbad aus 35%igem wäßrigem N-Methylpyrrolidon von 60°C gesponnen, nachgewaschen, getrocknet und auf einem Bügeleisen mit einer Temperatur von 304°C auf das 11-fache verstreckt. Die erhaltenen Fäden mit Einzelfilament-Titern von 1,1 dtex, zeigten eine Festigkeit von 103 cN/tex, eine Dehnung von 2,8% und einen Anfangsmodul von 4785 cN/tex.

Vergleichsversuch 4

Aromatisches Copolyamid aus 100 Mol-% Terephthaloylchlorid, 50 Mol-% 3,3'-Dimethoxybenzidin und 50 Mol-% p-Phenylendiamin

48,8 g (0,2 Mol) 3,3'-Dimethoxybenzidin, 21,6 g (0,2 Mol) p-Phenylendiamin, 4,6 g Calciumchlorid und 4,6 g Lithiumchlorid wurden unter Luftausschluß gelöst in 1716 g N-Methylpyrrolidon.

Zwischen 12°C und 71°C wurden innerhalb von 40 Minuten 80,2 g (0,395 Mol) Terephthaloylchlorid eingetragen. Die extrem zähe Lösung wurde mit 24,5 g Calciumoxid (96%ig) neutralisiert. Die Lösung war inhomogen und konnte nicht versponnen werden.

Vergleichsversuch 5

Aromatisches Polyamid aus 100 Mol-% 4,4'-Diaminodiphenylmethan und 100 Mol-% Terephthaloylchlorid

79,2 g (0,4 Mol) 4,4'-Diaminodiphenylmethan wurden gelöst in 2012 g N-Methylpyrrolidon. Zwischen 8°C und 70°C wurden innerhalb von 85 Minuten 82,1 g (0,404 Mol) Terephthaloylchlorid zugesetzt, dann neutralisiert mit 24,5 g Calciumoxid (96%ig), filtriert und entgast.

Es wurde eine Lösung, die 6,0% Polyamid und 2,03% Calciumchlorid enthält, erhalten. Die inhärente Viskosität des Copoylamids betrug nur 2,30. Gesponnen wurde nach einem Naßspinnprozeß durch eine 50-Loch-Düse mit Lochdurchmessern von 0,1 mm in ein Koagulationsbad aus 35% N-Methylpyrrolidon von 60°C. Nach der Wäsche und dem Trocknen erfoglte eine Verstreckung auf einem Bügeleisen von 420°C auf das 2,1-fache.

Es wurden Fäden mit Einzelfilament-Titern von 3,24 dtex, einer Festigkeit von nur 9 cN/tex und einer Dehnung von 2,2% erhalten.

Vergleichsversuch 6

Aromatisches Polyamid aus 100 Mol-% Terephthaloylchlorid und 100 Mol-% 3,3'-Dimethylbenzidin

84,8 g (0,40 Mol) 3,3'-Dimethylbenzidin wurden gelöst in 2099 g N-Methylpyrrolidon.

Zwischen 10° und 68°C wurden innerhalb von 65 Minuten 81,7 g (0,402 Mol) Terephthaloylchlorid zugegeben.

Schon zu einem frühen Zeitpunkt der Säurechlorid-Zugabe fiel ein farbloses, unlösliches und demzufolge nicht spinnbares Produkt aus.

Beispiel 3

Aromatisches Copolyamid aus 100 Mol-% Terephthaloylchlorid, 50 Mol-% 3,3'-Dimethoxybenzidin, 25 Mol-% 4,4'-Diaminodiphenylmethan un 25 Mol-% p-Phenylendiamin

48,8 g (0,2 Mol) 3,3'-Dimethylbenzidin, 19,8 g (0,1 Mol) 4,4'-Diaminodiphenylmethan, 10,8 g (0,1 Mol) p-Phenylendiamin, 4,6 g Calciumchlorid und 4,6 g Lithiumchlorid wurden gelöst in 1846 g N-Methylpyrrolidon. Innerhalb von 90 Minuten wurden bei Temperaturen zwischen 11°C und 70°C 82,0 g (0,404 Mol) Terephthaloylchlorid zudosiert. Die Neutralisation erfolgte mit 24,5 g Calciumoxid (96%ig), danach 30 Minuten bei 80°C Nachrühren.

Die Lösung wurde filtriert und entgast. Sie enthielt 6,5% Polymer, 2,4% Calciumchlorid und 0,23% Lithiumchlorid. Das Copolyamid zeigte eine inhärente Viskosität von 3,95.

Das Naßspinnen durch eine 50-Loch-Düse mit Lochdurchmessern von je 0,1 mm in ein Fällbad aus 35%igem wäßrigem N-Methylpyrrolidon von 60°C, Nachwaschen, Trocknen und Verstrecken auf einem Bügeleisen von 322°C auf das 16,5-fache lieferte Fäden mit folgenden Eigenschaften: Einzelfilamenttiter: 1,12 dtex; Festigkeit: 92 cN/tex; Dehnung 2,9%; Anfangsmodul: 4321 cN/tex.

Beispiel 4

Aromatisches Copolyamid aus 100 Mol-% Terephthaloylchlorid, 25 Mol-% 3,3'-Dichlorbenzidin, 25 Mol-% 4,4'-Diaminodiphenylmethan und 50 Mol-% p-Phenylendiamin

25,3 g (0,1 Mol) 3,3'-Dichlorbenzidin, 19,8 g (0,1 Mol) 4,4'-Diaminodiphenylmethan, 21,6 (0,2 Mol) p-Phenylendiamin, 9,0 g Calciumchlorid und 9,0 g Lithiumchlorid wurden gelöst in 1797 g N-Methylpyrrolidon und zwischen 11°C und 70°C innerhalb von 90 Minuten umgesetzt mit 82,0 g (0,404 Mol) Terephthaloylchlorid. Neutralisiert wurde mit 24,5 g Calciumoxid (96%ig), Nachrührzeit 30 Minuten. Die Lösung wurde filtriert und entgast. Sie enthielt 6,0% Polymer, 2,7% Calciumchlorid und 0,45% Lithiumchlorid. Das Copolyamid zeigte eine inhärente Viskosität von 3,11.

Gesponnen wurde durch eine 50-Loch-Düse mit Lochdurchmessern von je 0,1 mm in ein wäßriges N-Methylpyrrolidon-Fällbad (35%) von 40°C, dann durch 4 Waschbäder, über eine Trockengalette (180°C) und schließlich über ein Bügeleisen von 342°C, wobei auf das 3,7-fache verstreckt wurde. Die Fäden hatten Einzelfilamenttiter von 2,7 dtex, Festigkeit von 67 cN/tex, Dehnung von 2,7% und einen Anfangsmodul von 3552 cN/tex.

Beispiel 5

Aromatisches Copolyamid aus 100 Mol-% Terephthaloylchlorid, 50 Mol-% 3,3'-Dimethylbenzidin, 25 Mol-% 4,4'-Bis-(4''-aminophenoxy)-diphenyl und 25 Mol-% p-Phenylendiamin

36,8 g (0,1 Mol) 4,4'-Bis-(4''-aminophenoxy)-diphenyl, 42,4 g (0,2 Mol) 3,3'-Dimethylbenzidin, 10,8 g (0,1 Mol) p-Phenylen diamin, 5,5 g Calciumchlorid und 5,5 g Lithiumchlorid wurden bei 10°C unter Inertgas gelöst in 2170 g N-Methylpyrrolidon.

Zwischen 10°C und 68°C wurden innerhalb von 90 Minuten 82,2 g (0,405 Mol) Terephthaloylchlorid zugegeben, neutralisiert mit 24,5 g Calciumoxid (96%ig), filtriert und entgast. Die Lösung enthielt 6,0%

Polyamid, 2,1% Calciumchlorid und 0,23% Lithiumchlorid. Das Copolymer hatte eine inhärente Viskosität von 2,68.

Die Lösung wurde durch eine Düse mit 50 Löchern von je 0,1 mm Durchmesser in ein Fällbad aus 35%igem wäßrigem N-Methylpyrrolidon von 40°C gesponnen. Die Fäden wurden gewaschen, getrocknet und auf einem Bügeleisen mit einer Temperatur von 280°C auf das 5,1-fache verstreckt. Einzelfilamenttiter: 2,08 dtex; Festigkeit: 73 cN/tex; Dehnung: 2,6%, Anfangsmodul: 3931 cN/tex.

Beispiel 6

Aromatisches Copolyamid aus 100 Mol-% Terephthaloylchlorid, 50 Mol-% 3,3'-Dimethylbenzidin, 25 Mol-% 1,4-Bis-(4'-aminophenoxy)-benzol und 25 Mol-% p-Phenylendiamin

84,8 g (0,4 Mol) 3,3'-Dimethylbenzidin, 58,4 g (0,2 Mol) 1,4-Bis-(4'-aminophenoxy)-benzol und 21,6 g (0,2 Mol) p-Phenylendiamin wurden in 3750 g N-Methylpyrrolidon gelöst. Bei 16°C wurde auf einmal 162,4 g (0,8 Mol) Terephthaloylchlorid zugegeben und innerhalb von 50 Minuten auf 61°C hochgeheizt. Nach Erreichen der gewünschten Viskosität wurde die Lösung mit 49,0 g Calciumoxid (96%ig) neutralisiert.

Es folgten 80 Minuten Nachrühren bei 70°C Filtration und Entgasung. Die Lösung enthielt 6,5% Copolyamid und 2,16% Calciumchlorid. Die inhärente Viskosität des Polymeren betrug, 3,84.

Die Lösung wurde nach einem sogenannten "Trockendüsen-Naßspinnprozeß" versponnen. Dazu wurde durch eine Spinndüse mit 50 Löchern von je 0,15 mm Durchmesser — deren Löcher einen relativ weiten Abstand voneinander haben — und die sich in einem Abstand von 38 mm über dem Fällbad befand, senkrecht von oben nach unten gesponnen. Das Fällbad hatte eine Temperatur von 32°C und bestand aus einer Lösung von 23% N-Methylpyrrolidon in Wasser. Die Spinngeschwindigkeit betrugt 26,5 m/min, die Abzugsgeschwindigkeit 15,7 m/min und der Spinnverzug 0,59. Die Fäden wurden durch mehrere Waschbäder und über 2 Trockengaletten (180°C) geführt und auf einem Bügeleisen von 390°C auf das 14-fache verstreckt. Es wurden Fäden mit Einzelfilamenttitern von 1,52 cN/tex, einer Festigkeit von 177 cN/tex, einer Dehnung von 2,8% und einem Anfangsmodul von 6808 cN/tex erhalten.

Vergleichsversuch 7

Aromatisches Polyamid aus 100 Mol-% Terephthaloylchlorid und 100 Mol-% 1,4-Bis-(4'-aminophenyl)-benzol

a) 89,84 g (0,308 Mol) 1,4-Bis-(4'-aminophenoxy)-benzol wurden gelöst in 2000 g N-Methylpyrrolidon. Bei 18°C wurden 62,5 g (0,308 Mol) Terephthaloylchlorid zugegeben und hochgeheizt. Nach 15 Minuten und einer Massetemperatur von 54°C fiel das Polymer aus. Eine Verspinnung war nicht möglich.

b) 89,84 g (0,308 Mol) 1,4-Bis-(4'-aminophenoxy)-benzol, 10,0 g Lithiumchlorid und 10,0 g Calciumchlorid wurden gelöst in 2000 g N-Methylpyrrolidon. Bei 27°C wurden 62,5 g (0.308 Mol) Terephthaloylchlorid zugegeben und innerhalb von 40 Minuten auf 70°C hochgeheizt. Bei dieser Temperatur wurden weitere 1,25 g (0,006 Mol) Terephthaloylchlorid zugegeben und weitere 15 Minuten gerührt. Neutralisiert wurde mit 19,2 g Calciumoxid (96%ig).

Die Lösung enthielt 5,95% Polyamid, 2,02% Calciumchlorid und 0,46% Lithiumchlorid. Die Polymerviskosität betrug 2,11.

Es wurde aus einer 200-Loch-Düse mit 0,07 mm Lochdurchmesser in ein Fällbad aus 35%igem wäßrigem N-Methylpyrrolidon von 40°C gesponnen. Nach der Wäsche und Trocknung erfolgte die Verstreckung auf einem Bügeleisen von 400°C auf das 2,1-fache. Die Fäden hatten Einzelfilamenttiter von 1,13 dtex, Festigkeiten von nur 19 cN/tex und Dehnungen von 3,1%.

Beispiel 7

Aromatisches Copolyamid aus 100 Mol-% Terephthaloylchlorid, 25 Mol-% 1,4-Bis-(4'-aminophenoxy)-benzol, 50 Mol-% 3,3'-Dimethylbenzidin und 25 Mol-% p-Phenylendiamin

97,6 g (0,4 Mol) 3,3'-Dimethoxybenzidin, 58,4 (0,2 Mol) 1,4-Bis-(4'-aminophenoxy)-benzol und 21,6 g (0,2 Mol) p-Phenylendiamin wurden unter Inertgas gelöst in 4054 g N-Methylpyrrolidon.

Die Lösung wurde bei 15°C versetzt mit 157,5 g (0,776 Mol) Terephthaloylchlorid. Es wurde auf 71°C hochgeheizt und während dieser Zeit weitere 5,2 g (0,026 Mol) Terephthaloylchlorid zudosiert. Nachdem die erwünschte Viskosität erreicht worden war, wurde mit 49,0 g Calciumoxid (96%ig) neutralisiert und bei 70°C weitere 70 Minuten lang nachgerührt und dann die Lösung filtriert und entgast. Sie enthielt 6,3% Polyamid und 2,0% Calciumchlorid. Die inhärente Viskosität des Polyamids betrug 4,73.

Die Lösung wurde nach einem Naßspinnprozeß versponnen durch eine Düse mit 40 Löchern von je 0,1 mm Durchmesser. Als Fällbad diente eine 20%ige wäßrige Lösung von N-Methylpyrrolidon von 60°C. Die Filaments wurden gewaschen, getrocknet und auf einem Bügeleisen von 320°C auf das 10,5-fache verstreckt. Die Fäden zeigten folgende Eigenschaften: Einzelfilamenttiter 1,13 dtex; Festigkeit: 140 cN/tex; Dehnung 3,3%; Anfangsmodul 5454 cN/tex.

Beispiel 8

Aromatisches Copolyamid aus 100 Mol-% Terephthaloylchlorid, 50 Mol-% 3,3'-Dimethoxybenzidin, 31,25 Mol-% 1,4-Bis-(4'-aminophenoxy)-benzol und 18,75 Mol-% p-Phenylendiamin

97,6 g (0,4 Mol) 3,3'-Dimethoxybenzidin, 73,0 g (0,25 Mol) 1,4-Bis-(4'-aminophenoxy)-benzol, 16,2 g (0,15 Mol) p-Phenylendiamin, 10,1 g Calciumchlorid und 10,1 g Lithiumchlorid wurden gelöst in 4054 g

N-Methylpyrrolidon und bei 16°C mit 155,9 g (0,768 Mol) Terephthaloylchlorid versetzt. Es wurde auf 67°C hochgeheizt und bei dieser Temperatur weiter 9,0 g (0,044 Mol) Terephthaloylchlorid eindosiert. Nachdem die gewünschte Viskosität erreicht war, wurde mit 49,0 g Calciumoxid (96%ig) neutralisiert, dann filtriert und entgast. Die Lösung enthielt 6,5% Polymer, 2,2% Calciumchlorid und 0,23% Lithiumchlorid. Das Copolyamid zeigte eine inhärente Viskosität von 2,42. Die Lösung wurde nach einem Naßspinnprozeß durch eine Düse mit 200 Löchern von je 0,09 mm Durchmesser in ein Fällbad aus 35%igem wäßrigen N-Methylpyrrolidon von 60°C versponnen. Die Filamente wurden gewaschen, getrocknet und auf einem Bügeleisen von 330°C auf das 11,2-fache verstreckt. Die Fäden zeigten folgende Eigenschaften: Einzelfilamenttiter 0,55 dtex; Festigkeit 118 cN/tex; Dehnung 3,2%; Anfangsmodul 4493 cN/tex.

Vergleichsversuch 8

Aromatische Copolyamid aus 100 Mol-% Terephthaloylchlorid, 80 Mol-% 3,3'-Dimethoxybenzidin, 10 Mol-% 1,4-Bis-(4'-aminophenoxy)-benzol und 10 Mol-% p-Phenylendiamin

78,1 g (0,32 Mol) 3,3'-Dimethoxybenzidin, 11,7 g (0,04 Mol) 1,4-Bis-(4'-aminophenoxy)-benzol, 4,32 g (0,04 Mol) p-Phenylendiamin und 10,5 g Lithiumchlorid wurden in 2099 g N-Methylpyrrolidon gelöst. Bei Temperaturen zwischen 10°C und 70°C wurden 81,6 g (0,402 Mol) Terephthaloylchlorid zugegeben und mit 24,5 g Calciumoxid (96%ig) neutralisiert. Die Lösung war inhomogen und nicht spinnbar.

Vergleichsversuch 9

Aromatisches Copolyamid aus 100 Mol-% Terephthaloylchlorid, 55 Mol-% 3,3'-Dimethylbenzidin, 10 Mol-% 1,4-Bis-(4'-aminophenoxy)-benzol und 35 Mol-% p-Phenylendiamin

46,6 g (0,22 Mol) 3,3'-Dimethylbenzidin, 11,7 g (0,04 Mol) 1,4-Bis-(4'-aminophenoxy)-benzol, 15,1 g (0,14 Mol) p-Phenylendiamin und 9,6 g Lithiumchlorid wurden in 1912 g N-Methylpyrrolidon gelöst. Zwischen 9°C und 70°C wurden 81,8 g (0,403 Mol) Terephthaloylchlorid zugegeben. Nach Erreichen der gewünschten Viskosität wurde durch Zugabe von 24,5 g Calciumoxid (96%ig) abgestoppt.

Die Polymerlösung war inhomogen und nicht spinnbar. Diese Nachteile konnten behoben werden durch Absenken der Polymerkonzentration in der Lösung auf 3—4%.

Vergleichsversuch 10

Aromatisches Copolyamid aus 100 Mol-% Terephthaloylchlorid, 50 Mol-% 3,3'-Dimethoxybenzidin, 10 Mol-% 1,4-Bis-(4'-aminophenoxy)-benzol und 40 Mol-% p-Phenylendiamin

73,2 g (0,3 Mol) 3,3'-Dimethoxybenzidin, 17,5 g (0,06 Mol) 1,4-Bis-(4'-aminophenoxy)-benzol, 25,9 g (0,24 Mol) p-Phenylendiamin und 14,9 g Lithiumchlorid wurden in 2966 g N-Methylpyrrolidon gelöst und zwischen 30°C und 66°C umgesetzt mit 121,8 g (0,6 Mol) Terephthaloylchlorid. Neutralisiert wurde mit 38,5 g Calciumoxid (96%ig).

Die sehr zähe Polyamidlösung war inhomogen und ließ sich nicht verspinnen. Dagegen waren Lösungen des gleichen Copolyamids bei niedrigerer Polymerkonzentration noch spinnbar. Auch hier war ein Absenken der Polymerkonzentration auf Werte von zum Beispiel unter 4% von Vorteil.

Beispiel 9

Aromatisches Copolyamid aus 100 Mol-% Terephthaloylchlorid, 62,5 Mol-% 3,3'-Dimethylbenzidin, 12,5 Mol-% 1,4-Bis-(4'-aminophenoxy)-benzol und 25 Mol-% p-Phenylendiamin

41,1 g 3,3'-Dimethylbenzidin, 11,3 g 1,4-Bis-(4'-aminophenoxy)-benzol und 8,4 g p-Phenylendiamin wurden in 2387 g N-Methylpyrrolidon gelöst und zwischen 10 und 70°C umgesetzt mit 62,9 g Terephthaloylchlorid. Die erhaltene, sehr zähe Polymerlösung wurde mit 19,0 g Calciumoxid (96%ig) neutralisiert. Sie enthielt dann 4,0% Copolyamid und 1,4% Calciumchlorid in der Lösung. Die inhärente Viskosität des Copolyamids betrug 5,54. Die Lösung wurde filtriert und entgast und in einem Naßspinnprozeß durch eine Düse mit 50 Löchern mit je 0,1 mm Durchmesser in ein Fällbad gesponnen, das aus einer 35%igen wäßrigen Lösung von N-Methylpyrrolidon bestand und 60°C aufwies. Der erhaltene Spinnfaden wurde gewaschen, getrocknet und über ein Bügeleisen von einer Maximaltemperatur von 385°C auf das 4,14-fache verstreckt. Es wurden Fäden mit einem Einzeltiter von 1,12 dtex, einer Festigkeit von 136 cN/tex, einer Reißdehnung von 2,1% und einem Anfangsmodul von 7450 cN/tex erhalten.

Beispiel 10

Aromatisches Polyamid aus 100 Mol-% Terephthaloylchlorid, 50 Mol-% 3,3'-Dimethylbenzidin, 37,5 Mol-% p-Phenylendiamin und 12,5 Mol-% 1,4-Bis-(4'-aminophenoxy)-benzol

212 g (1,0 Mol) 3,3'-Dimethylbenzidin, 81 g (0,75 Mol) p-Phenylendiamin und 73 g (0,25 Mol) 1,4-Bis-(4'-aminophenoxy)-benzol wurden in 14420 g N-Methylpyrrolidon gelöst und bei 16°C mit 404,8 g Terephthaloylchlorid umgesetzt. Das Reaktionsgemisch wurde erwärmt und bei 65°C mit weiteren 1,2 g Terephthaloylchlorid (insgesamt 2,0 Mol) umgesetzt. Bei 70°C wurde für 120 Minuten nachgerührt. Die Lösung wurde anschließend durch Zusatz von 122,7 g Calciumoxid (96%ig) neutralisiert. Die Lösung enthielt 4,1% Copolyamid und 1,45% Calciumchlorid. Die inhärente Viskosität des Polymeren betrug 6,26.

Die Lösung wurde filtriert, entgast und in einem sogenannten "Trockendüsen-Naßspinnprozeß" aus einer 200 Lochdüse mit Lochdurchmessern von 0,09 mm versponnen. Die Spinndüse befand sich im Gasraum mit einem Abstand von 10 mm über einem Fällbad, in das senkrecht von oben nach unten

hineingesponnen wurde. Das Fällbad bestand aus einer 35%igen wäßrigen Lösung von N-Methylpyrrolidon bei 60°C. Die erhaltenen Fäden wurden gewaschen, getrocknet und auf einem 4-teiligen Bügeleisen mit Oberflächentemperaturen von 340, 350, 360 und 390°C auf das 6,1-fache verstreckt. Die erhaltenen Fäden wiesen folgende Eigenschaften auf: Einzeltiter 0,92 dtex, Festigkeit 201 cN/tex (im gedrehten Zustand), Reißdehnung 3,5% und Anfangsmodul 7300 cN/tex.

Der Versuch wurde wiederholdt unter Verwendung derselben Monomerzusammensetzung, die Spinnlösung wies jedoch 4,5% Polymer und 1,69% Calciumchlorid auf. Die inhärente Viskosität des Copolyamids wurde zu 6,32 bestimmt. Das Ausspinnen erfolgte in gleicher Weise wie oben beschrieben, die Bügeneisentemperaturen betrugen jedoch 370, 370, 380 und 385°C. Die Gesamtverstreckung betrug das 4,3-fache. Die erhaltenen Fäden zeigten folgende Eigenschaften: Einzeltiter 1,34 dtex, Festigkeit 183 cN/tex (gemessen an einem mit Drehung versehenen Faden), Dehnung 3,5% und Anfangsmodul 7400 cN/tex.

Der ursprünglich beschriebene Versuch wurde wiederholt, wobei eine Polymerlösung derselben Monomerzusammensetzung hergestellt wurde, die jedoch 5,0% Polymer und 1,8% Calciumchlorid in der Spinnlösung enthielt. Die inhärente Viskosität des Copolyamids betrug 5,89. Die erhaltene Lösung wurde, wie oben beschrieben, einem Trockendüsen-Naßspinnprozeß unterworfen, die Bügeleisentemperaturen betrugen 340, 350, 360 und 390°C, die Verstreckung betrug unter diesen Bedingungen 1:5,3. Es wurden Fäden erhalten mit folgenden Eigenschaften:

Einzeltiter 0,99 dtex, Festigkeit 197 cN/tex (gedreht), Dehnung 3,3% und Anfangsmodul 7700 cN/tex.

In der gleichen Weise wurde eine Polymerlösung derselben Monomerzusammensetzung hergestellt, die einmal 5,5% Polymer und 2,0% Calciumchlorid enthielt. Die inhärente Viskosität des Copolyamids wurde zu 5,49 bestimmt. Diese Polymerlösung wurde ebenfalls nach dem oben beschriebenen Spinnprozeß versponnen bei Bügeleisentemperaturen von 370, 370, 380 und 395°C. Die Verstreckung betrug 1:6,5. Die Fäden zeigten folgende Eigenschaften: Einzeltiter 1,21 dtex, Festigkeit 195 cN/tex (gedreht), Dehnung 3,4% und Anfangsmodul 7900 cN/tex.

## Vergleichsversuch 11

Aromatisches Copolyamid aus 100 Mol-% Terephthaloylchlorid, 35 Mol-% 3,3'-Dimethylbenzidin, 15 Mol-% 1,4-Bis-(4'aminophenoxy)-benzol und 50 Mol-% p-Phenylendiamin

29,7 g (0,14 Mol) 3,3'-Dimethylbenzidin, 17,5 g (0,06 Mol) 1,4-Bis-(4'-aminophenoxy)-benzol, 21,6 g (0,2 Mol) p-Phenylendiamin und 9,2 g Lithiumchlorid wurden in 1839 g N-Methylpyrrolidon gelöst und zwischen 6°C und 70°C umgesetzt mit 81,9 g (0,403 Mol) Terephthaloylchlorid, und dann neutralisiert mit 24,5 g Calciumoxid (96%ig).

Die Polymerlösung war inhomogen und ließ sich nicht verspinnen.

Wie aus dem nachfolgenden Beispiel 11 ersichtlich, können Polymerlösungen ähnlicher Zusammensetzung versponnen werden, wenn die Polymerkonzentration auf 4% oder weniger gesenkt wird.

## Beispiel 11

Aromatisches Copolyamid aus 100 Mol-% Terephthaloylchlorid, 37,5 Mol-% 3,3'-Dimethylbenzidin, 12,5 Mol-% 1,4-Bis-(4'-aminophenoxy)-benzol und 50 Mol-% p-Phenylendiamin

Man löst 24,7 g 3,3'-Dimethylbenzidin, 11,3 g 1,4-Bis-(4'-aminophenoxy)-benzol und 16,8 g p-Phenylendiamin in 2193 g N-Methylpyrrolidon. Zwischen 10 und 70°C wurden 62,9 g Terephthaloylchlorid zugegeben. Die Viskose Lösung wurde mit 19,0 g Calciumoxid (96%ig) neutralisiert. Anschließend wurde die erhaltene Polymerlösung filtriert und entgast. Sie enthielt 4% Copolyamid und 1,6% Calciumchlorid. Diese Lösung wurde in einem Naßspinnprozeß mit Hilfe einer 50 Lochdüse mit Lochdurchmessern von 0,1 mm in ein 60°C warmes Fällbad aus 35%igen waßrigen N-Methylpyrrolidonlösungen versponnen. Die erhaltenen Fäden wurden gewaschen, getrocknet und einem Bügeleisen von maximal 385°C auf das 4,6-fache verstreckt. Die Fäden zeigten Einzeltiter von 1,5 dtex, eine Festigkeit von 112 cN/tex, Reißdehnung 2,3% und einen Anfangsmodul von 6117 cN/tex.

## Vergleichsversuch 12

Aromatisches Copolyamid aus 100 Mol-% Terephthaloylchlorid, 25 Mol-% 3,3'-Dimethylbenzidin, 12,5 Mol-% 1,4-Bis-(4'-aminophenoxy)-benzol und 62,5 Mol-% p-Phenylendiamin

16,5 g 3,3'-Dimethylbenzidin, 11,3 g 1,4-Bis-(4'-aminophenoxy)-benzol und 21,0 g p-Phenylendiamin wurden in 2096 g N-Methylpyrrolidon gelöst und zwischen 10 und 70°C mit 62,9 g Terephthaloylchlorid umgesetzt. Es wurde nachrühren gelassen und dann mit 19,0 g Calciumoxid (96%ig) neutralisiert. Die so erzeugte Polymerlösung enthielt 4% Copolyamid und 1,6% Calciumchlorid. Das Copolyamid hatte eine inhärente Viskosität von 3,12. Nach dem Filtrieren und Entgasen wurde die Lösung durch eine 50 Lochdüse (Lochdurchmesser 0,1 mm) in ein Fällbad aus 35% N-Methylpyrrolidon und 65% Wasser bei 60°C gesponnen. Die erhaltenen Faden wurden gewaschen, getrocknet und anschließend auf einem Bügeleisen von maximal 385°C auf das 2,44-fache verstreckt. Die Fäden zeigten folgende Eigenschaften:

Einzeiltiter 1,22 dtex, Festigkeit 46 cN/tex, Dehnung 1,5% und Anfangsmodul von 4338 cN/tex.

Während der Anfangsmodul der erhaltenen Fäden noch als ausgezeichnet gelten kann, fiel demgegenüber der Wert der Feinheitsbezogenen maximalen Reißkraft deutlich gegenüber den anderen Proben ab.

Beispiel 12

Aromatisches Copolyamid aus 100 Mol-% Terephthaloylchlorid, 25 Mol-% 3,3'-Dimethylbenzidin, 40 Mol-% 1,4-Bis-(4'-aminophenoxy)-benzol und 35 Mol-% p-Phenylendiamin

21,2 g (0,1 Mol) 3,3'-Dimethylbenzidin, 46,7 g (0,16 Mol) 1,4-Bis-(4'-aminophenoxy)-benzol, 15,1 g (0,14 Mol) p-Phenylendiamin und 10,4 g Lithiumchlorid wurden gelöst in 2061 g N-Methylpyrrolidon. Zwischen 10°C und 70°C wurden 81,8 g (0,403 Mol) Terephthaloylchlorid zugegeben. Die viskose Lösung wurde mit 24,5 g Calciumoxid (96%ig) neutralisiert und dann filtriert und entgast. Sie enthält 6,0% Polyamid, 2,0% Calciumchlorid und 0,46% Lithiumchlorid. Die inhärente Viskosität betrug 3,70.

Die Lösung wurde nach einem Naßspinnprozeß versponnen durch eine Düse mit 50 Löchern von je 0,1 mm Durchmesser in ein Fällbad aus 35%iger wäßriger N-Methylpyrrolidon-Losung von 60°C. Nach Wäsche und Trocknung wurden die Fäden auf einem Bügeleisen von 380°C auf das 9,2-fache verstreckt. Die Fäden hatten folgende Eigenschaften: Einzelfilamenttiter: 1,70 dtex; Festigkeit 134 cN/tex und Dehnung von 3,4%.

Beispiel 13

Aromatisches Copolyamid aus 100 Mol-% Terephthaloylchlorid, 45 Mol-% 1,4-Bis-(4'-aminophenoxy)-benzol, 40 Mol-% 3,3'-Dimethylbenzidin und 15 Mol-% p-Phenylendiamin

33,9 g (0,16 Mol) 3,3'-Dimethylbenzidin, 52,6 g (0,18 Mol) 1,4-Bis-(4'-aminophenoxy)-benzol, 6,5 g (0,06 Mol) p-Phenylendiamin und 11,1 g Lithiumchlorid wurden gelöst in 2217 g N-Methylpyrrolidon. Zwischen 8°C und 70°C wurden 81,8 g (0,403 Mol) Terephthaloylchlorid zugesetzt. Die viskose Lösung wurde mit 24,5 g Calciumoxid (96%ig) neutralisiert und dann filtriert und entgast. Sie enthielt 6% Polyamid, 1,84% Calciumchlorid und 0,46% Lithiumchlorid. Die inhärente Viskosität des Polyamids betrugt 3,72.

Die Lösung wurde durch einen 50-Loch-Düse mit Lochdurchmessern von 0,1 mm in ein 35%iges wäßriges N-Methylpyrrolidon-Fällbad von 60°C versponnen. Die Fäden wurden gewaschen, getrocknet und auf einem Bügeleisen von 400°C auf das 8,4-fache verstreckt. Die Fäden hatten folgende Eigenschaften: Einzelfilamenttiter: 1,92 dtex; Festigkeit 138 cN/tex; Dehnung: 3,2%.

Beispiel 14

Aromatisches Copolyamid aus 100 Mol-% Terephthaloylchlorid, 40 Mol-% 1,4-Bis-(4'-aminophenoxy)-benzol, 10 Mol-% p-Phenylendiamin und 50 Mol-% 3,3'-Dimethoxybenzidin

73,2 g (0,3 Mol) 3,3'-Dimethoxybenzidin, 70,1 g (0,24 Mol) 1,4-Bis-(4'-aminophenoxy)-benzol, 6,5 g (0,06 Mol) p-Phenylendiamin und 18,2 g Lithiumchlorid wurden gelöst in 3613 g N-Methylpyrrolidon. Zwischen 33°C und 65°C wurden 122,8 g (0,605 Mol) Terephthaloylchlorid eindosiert und dann neutralisiert mit 38,5 g Calciumoxid (96%ig), filtriert und entgast.

Die Lösung enthielt 6,0% Polyamid, 1,69% Calciumchlorid und 0,46% Lithiumchlorid. Die inhärente Viskosität des Polymeren betrug 4,21.

Es wurde durch eine 50-Loch-Düse mit je 0,1 mm Lochdurchmesser in ein Fällbad aus 35%igem, wäßrigem N-Methylpyrrolidon von 60°C gesponnen. Die Fäden wurden gewaschen, getrocknet und verstreckt auf einem Bügeleisen von 380°C auf das 13,5-fache. Die Fäden hatten dann Einzelfilamenttiter von 1,38 dtex; eine Festigkeit von 129 cN/tex und eine Dehnung von 3,3%.

Beispiel 15

Aromatisches Copolyamid aus 100 Mol-% Terephthaloylchlorid, 60 Mol-% 3,3'-Dimethylbenzidin, 30 Mol-% 1,4-Bis-(4'-aminophenoxy)-benzol und 10 Mol-% p-Phenylendiamin

Es wurden gelöst 50,9 g (0,24 Mol) 3,3'-Dimethylbenzidin, 35,0 g (0,12) 1,4-Bis-(4'-aminophenoxy)-benzol, 4,32 g (0,04 Mol) p-Phenylendiamin und 10,8 g Lithiumchlorid in 2173 g N-Methylpyrrolidon. Zwischen 10°C und 68°C wurden 81,8 g (0,403 Mol) Terephthaloylchlorid zugegeben und dann neutralisiert mit 24,5 g Calciumoxid (96%ig), filtriert und entgast.

Die Lösung enthielt 6,0% Polyamid, 1,87% Calciumchlorid, 0,45% Lithiumchlorid. Die inhärente Viskosität betrug 3,87.

In einem Naßspinnprozeß wurde durch eine 50-Loch-Düse von je 0,1 mm Lochdurchmesser in ein Fällbad aus 35%igem, wäßrigem N-Methylpyrrolidon von 60°C gesponnen, dann die Fäden gewaschen, getrocknet und auf einem Bügeleisen von 380°C auf das 4,9-fache verstreckt. Die Fäden hatten Einzelfilamenttiter von 1,56 dtex bei Festigkeiten von 108 cN/tex und einer Dehnung von 2,2%.

Vergleichsbeispiel 13

Aromatisches Copolyamid aus 100 Mol-% Terephthaloylchlorid, 10 Mol-% 3,3'-Dimethylbenzidin, 40 Mol-% 1,4-Bis-(4'aminophenoxy)-benzol und 50 Mol-% p-Phenylendiamin

8,5 g (0,04 Mol) 3,3'-Dimethylbenzidin, 46,7 g (0,16 Mol) 1,4-Bis-(4'-aminophenoxy)-benzol, 21,6 g (0,2 Mol) p-Phenylendiamin und 11,5 g Lithiumchlorid wurden in 2283 g N-Methylpyrrolidon gelöst. Zwischen 10°C und 69°C wurden innerhalb von 75 Minuten 82,0 g (0,404 Mol) Terephthaloylchlorid zugegeben. Die Lösung wurde neutralisiert mit 24,5 g Calciumoxid (96%ig) und dann filtriert und entgast. Die Lösung enthielt 6,0% Polymer, 1,78% Calciumchlorid und 0,46% Lithiumchlorid. Die inhärente Viskosität des Polymeren betrug 3,45.

Es wurde durch eine 50-Loch-Düse von je 0,1 mm Lochdurchmesser in ein Fällbad aus 35%igem, wäßrigem N-Methylpyrrolidon von 60°C gesponnen. Die Fäden wurden gewaschen, getrocknet und über

einem Bügeleisen von 430°C auf das 6,2-fache verstreckt. Die Filamente zeigten folgende Eigenschaften: Einzelfilamenttiter: 1,52 dtex; Festigkeit: 95 cN/tex; Dehnung 3,3%.

Beispiel 16

Aromatisches Copolyamid aus 100 Mol-% Terephthaloylchlorid, 20 Mol-% 1,4-Bis-(4'-aminophenoxy)-benzol, 30 Mol-% p-Phenylendiamin und 50 Mol-% 3,3'-Dimethoxybenzidin

Es wurden gelöst 35,0 g (0,12 Mol) 1,4-Bis-(4'-aminophenoxy)-benzol, 73,2 g (0,3 Mol) 3,3'-Dimethoxybenzidin, 19,4 g (0,18 Mol) p-Phenylendiamin und 15,5 g Lithiumchlorid in 3139 g N-Methylpyrrolidon. Zwischen 25°C und 68°C wurden 123,8 g (0,61 Mol) Terephthaloylchlorid eindosiert. Die Lösung wurde neutralisiert mit 38,5 g Calciumoxid (96%ig), dann filtriert und entgast.

Die Lösung enthielt 6,0% Polymer, 1,94% Calciumchlorid und 0,45% Lithiumchlorid. Die inhärente Viskosität des Copolmers betrug 3,84.

Es wurde durch eine 50-Loch-Düse mit Lochdurchmessern von je 0,1 mm in ein Fällbad aus 35%igem, wäßrigem N-Methylpyrrolidon von 60°C gesponnen. Nach der Wäsche und Trocknung wurden die Fäden auf einem Bügeleisen von 340°C auf das 9,5-fache verstreckt. Die Fäden zeigten Einzelfilamenttiter von 1,22 dtex, Festigkeiten von 119 cN/tex und Dehnungen von 2,8%.

Beispiel 17

Aromatisches Copolyamid aus 100 Mol-% Terephthaloylchlorid, 37,5 Mol-% 3,3'-Dimethylbenzidin, 37,5 Mol-% p-Phenylendiamin und 25 Mol-% 1,4-Bis-(4'-aminophenoxy)-benzol

Gelöst wurden 31,8 g (0,15 Mol) 3,3'-Dimethylbenzidin, 29,2 g (0,1 Mol) 1,4-Bis-(4'-aminophenoxy)-benzol, 16,2 g (0,15 Mol) p-Phenylendiamin und 9,9 g Lithiumchlorid in 1968 g N-Methylpyrrolidon. Zwischen 9°C und 70°C wurden 82,3 g (0,405 Mol) Terephthaloylchlorid eindosiert. Nach dem Neutralisieren mit 24,5 g Calcuimoxid (96%ig) wurde die Lösung filtriert und entgast.

Die Lösung enthielt 6,0% Polyamid, 2,06% Calciumchlorid und 0,46% Lithiumchlorid. Die Polymerviskosität betrug 3,12.

Es wurde durch eine 50-Loch-Düse mit Lochdurchmessern von je 0,1 mm in ein Fällbad aus wäßrigem N-Methylpyrrolidon (35%) von 60°C gesponnen. Die Fäden wurden gewaschen, getrocknet und auf einem Bügeleisen von 350°C auf das, 6,7-fache verstreckt. Die Eigenschaften waren folgende: Einzelfilamenttiter; 1,5 dtex; Festigkeit 118 cN/tex; Dehnung 2,9%.

**Patentansprüche**

1. Geformte Gebilde insbesondere Fäden, Fasern, Faserpulp, Filme und Folien aus aromatische Copolyamiden des Dicarbonsäure-Diamin-Typs, dadurch gekennzeichnet, daß die formgebende Substanz ein Copolyamid ist, das wengistens die wiederkehrenden Struktureinheiten der Formeln

A $- OC - Ar - CO -$ sowie

B $- NH - Ar' - NH -$

C 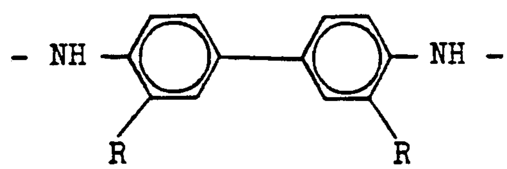

D 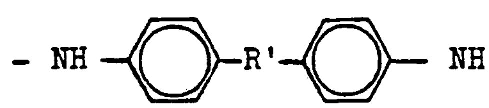

aufweist, wobei

—Ar— und —Ar'— zweiwertige aromatische Reste, bei denen die Valenzbindungen in para- oder vergleichbarer koaxialer oder paralleler Stellung stehen,

—R einen niederen Alkylrest oder einen niederen Alkoxyrest mit jeweils bis zu 4 C-Atomen oder einen Halogenrest und

—R'— einen unsubstituierten oder substituierten Methylenrest oder eine Gruppierung —O—Ar—O—, wobei —Ar— den gleichen Aufbau wie oben angegeben hat,

bedeuten, und die Anteile der Diaminkomponenten B, C und D zur Gesamtmenge an Diaminkomponenten in Mol-% innerhalb eines Bereiches liegen, der durch die folgenden Eckpunkte definiert ist:

Punkt Q entsprechend 5 Mol-% B, 45 Mol-% C, 50 Mol-% D;

Punkt R entsprechend 45 Mol-% B, 5 Mol-% C, 50 Mol-% D;
Punkt S entsprechend 60 Mol-% B, 35 Mol-% C, 5 Mol-% D;
Punkt T entsprechend 20 Mol-% B, 75 Mol-% C, 5 Mol-% D;
Punkt U entsprechend 5 Mol-% B, 80 Mol-% C, 15 Mol-% D;
und das Copolyamid eine inhärente Viskosität von etwa 2,4 bis 6,5 dl/g (gemessen an Lösungen von 0,5 g Polyamid in 100 ml 98 gew.-%iger $H_2SO_4$ bei 25°C) aufweist.

2. Geformte Gebilde nach Anspruch 1, dadurch gekennzeichnet, daß —Ar— und —Ar'— jeweils 1,4-Phenylenrest bedeuten.

3. Geformte Gebilde nach Anspruch 1, dadurch gekennzeichnet, daß —R die Bedeutung —$CH_3$, —$OCH_3$ oder —Cl hat.

4. Geformte Gebilde nach einem der vorhergehenden Ansprüche, dadurch gekennzeichnet, daß —R'— die Bedeutung

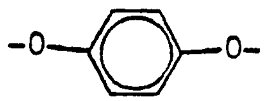 oder 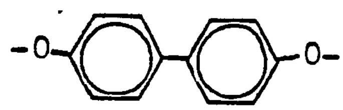 hat.

5. Geformte Gebilde nach einem der vorhergehenden Ansprüche, dadurch gekennzeichnet, daß die Anteile der Diaminkomponenten B, C und D zur Gesamtmenge an Diaminkomponenten in Mol-% innerhalb eines Bereiches liegen, der durch die folgenden Eckpunkte definiert ist:
Punkt Q' entsprechend 15 Mol-% B, 45 Mol-% C, 40 Mol-% D;
Punkt R' entsprechend 40 Mol-% B, 20 Mol-% C, 40 Mol-% D;
Punkt S' entsprechend 50 Mol-% B, 40 Mol-% C, 10 Mol-% D;
Punkt T' entsprechend 15 Mol-% B, 75 Mol-% C, 10 Mol-% D.

6. Geformte Gebilde nach einem der vorhergehenden Ansprüche, dadurch gekennezeichnet, daß die Anteile der Diaminkomponenten B, C und D zur Gesamtmenge an Diaminkomponenten in Mol-% innerhalb eines Bereiches liegen, der durch die folgenden Eckpunkte definiert ist:
Punkt W entsprechend 5 Mol-% B, 45 Mol-% C, 50 Mol-% D;
Punkt X entsprechend 45 Mol-% B, 5 Mol-% C, 50 Mol-% D;
Punkt Y entsprechend 45 Mol-% B, 40 Mol-% C, 15 Mol-% D;
Punkt Z entsprechend 5 Mol-% B, 80 Mol-% C, 15 Mol-% D;
und das Copolyamid eine inhärente Viskosität von etwa 2,4 bis 5,0 dl/g (gemessen an Lösungen von 0,5 g Polyamid in 100 ml 98 gew.-%iger $H_2SO_4$ bei 25°C) aufweist.

7. Geformte Gebilde nach Anspruch 6, dadurch gekennzeichnet, daß die Anteile der Diaminkomponenten B, C und D zur Gesamtmenge an Diaminkomponenten in Mol-% innerhalb eines Bereiches liegen, der durch die folgenden Eckpunkte definiert ist:
Punkt W' entsprechend 15 Mol-% B, 50 Mol-% C, 35 Mol-% D;
Punkt X' entsprechend 45 Mol-% B, 20 Mol-% C, 35 Mol-% D;
Punkt Y' entsprechend 45 Mol-% B, 40 Mol-% C, 15 Mol-% D;
Punkt Z' entsprechend 15 Mol-% B, 70 Mol-% C, 15 Mol-% D.

8. Verfahren zur Herstellung geformter Gebilde aus aromatischen Copolyamiden durch Umsetzung wenigstens eines aromatischen Dicarbonsäuredichlorids mit zumindest annähernd äquimolaren Mengen eines Gemisches von aromatischen Diaminen in aprotischen Lösungsmitteln, gegebenenfalls unter Zusatz von Metallhalogeniden der 1. oder 2. Gruppe des Periodensystems als Lösungsvermittler, Neutralisation des gebildeten HCl durch Zusatz basisch wirkender Stoffe und anschließendes Verformen der erhaltenen Polymerlösung zu Fäden, Fasern, Faserpulp, Filmen oder Folien, dadurch gekennzeichnet, daß a/s Dicarbonsäurechloride Verbindungen der Formel

Cl—Co—Ar—CO—Cl A'

und als Diamine eine Mischung aus

B' $H_2N - Ar' - NH_2$

C' 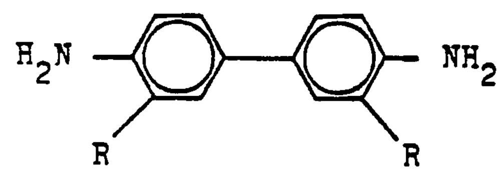 und

D' 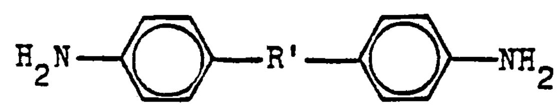

Verwendung finden, wobei —Ar—, —Ar'—, R— und —R'— die oben angegebene Bedeutung haben, die Molanteile der Diamine B', C' und D' zur Gesamtmolmenge der Diamine innerhalb eines Bereiches liegen, der durch die folgenden Eckpunkte definiert ist:

Punkt Q entsprechend 5 Mol-% B', 45 Mol-% C', 50 Mol-% D';
Punkt R entsprechend 45 Mol-% B', 5 Mol-% C', 50 Mol-% D';
Punkt S entsprechend 60 Mol-% B', 35 Mol-% C', 5 Mol-% D';
Punkt T entsprechend 20 Mol-% B', 75 Mol-% C', 5 Mol-% D';
Punkt U entsprechend 5 Mol-% B', 80 Mol-% C', 15 Mol-% D'.

Verwendung finden und die Polykondensation so weit geführt wird, daß das erzeugte Copolyamid eine inhärente Viskosität von etwa 2,4 bis 2,5 ml/g (gemessen an Lösungen von 0,5 g Polyamid in 100 dl 98 gew.-%iger Schwefelsäure bei 25°C) aufweist.

9. Verfahren nach Anspruch 8, dadurch gekennzeichnet, daß die Molanteile der Diamine B', C' und D' zur Gesamtmolmenge der Diamine innerhalb eines Bereiches liegen, der durch die folgenden Eckpunkte definiert ist:

Punkt Q' entsprechend 15 Mol-% B', 45 Mol-% C', 40 Mol-% D';
Punkt R' entsprechend 40 Mol-% B', 20 Mol-% C', 40 Mol-% D';
Punkt S' entsprechend 50 Mol-% B', 40 Mol-% C', 10 Mol-% D';
Punkt T' entsprechend 15 Mol-% B', 75 Mol-% C', 10 Mol-% D'.

10. Verfahren nach Anspruch 8, dadurch gekennzeichnet, daß die Molanteile der Diamine B', C' und D' zur Gesamtmol menge der Diamine innerhalb eines Bereiches liegen, der durch die folgenden Eckpunkte definiert ist:

Punkt W entsprechend 5 Mol-% B', 45 Mol-% C', 50 Mol-% D';
Punkt X entsprechend 45 Mol-% B', 5 Mol-% C', 50 Mol-% D';
Punkt Y entsprechend 45 Mol-% B', 40 Mol-% C', 15 Mol-% D';
Punkt Z entsprechend 5 Mol-% B', 80 Mol-% C', 15 Mol-% D';

und die Polykondensation so weit geführt wird, daß das erzeugte Copolyamid eine inhärente Viskosität von etwa 2,4 bis 5,0 dl/g (gemessen an Lösungen von 0,5 g Polyamid in 100 ml 98 gew.-%iger Schwefelsäure bei 25°C) aufweist.

11. Verfahren nach Anspruch 10, dadurch gekennzeichnet, daß die Molanteile der Diamine B', C' und D' zur Gesamtmolmenge der Diamine innerhalb eines Bereiches liegen, der durch die folgenden Eckpunkte definiert ist:

Punkt W' entsprechend 15 Mol-% B', 50 Mol-% C', 35 Mol-% D';
Punkt X' entsprechend 45 Mol-% B', 20 Mol-% C', 35 Mol-% D';
Punkt Y' entsprechend 45 Mol-% B', 40 Mol-% C', 15 Mol-% D';
Punkt Z' entsprechend 15 Mol-% B', 70 Mol-% C', 15 Mol-% D'.

**Revendications**

1. Articles façonnés, en particulier fils, fibres, pâtes de fibres, pellicules et feuilles, en copolyamides aromatiques du genre acides dicarboxyliques-diamines, artiles caractérisés en ce que ces copolyamides comportent au moins les motifs répétés suivants:

A - OC - Ar - CO - ainsi que

B - NH - Ar' - NH -

C 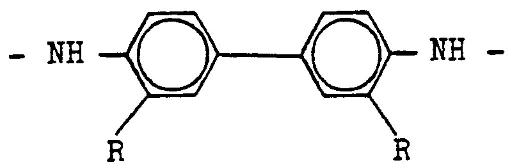 et

D 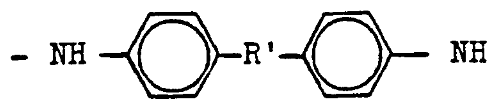

dans lesquels:

—Ar— et —Ar'— désignent des radicaux aromatiques divalents dont les liaisons de valence sont en position para ou bien en position coaxiale ou parallèle comparable,

—R est un alkyle ou un alcoxy inférieur pouvant avoir chacun jusqu'à 4 atomes de carbone ou bien un atome d'halogène, et

—R'— un radical méthylène avec ou sans substituants ou un groupe —O—Ar—O—, —Ar— ayant la même signification et la même structure que ci-dessus,

et les proportions des diamines B, C et D par rapport à leur quantité totale, en pourcentages molaires, se situent dans un intervalle qui est défini par les sommets suivants:

Point Q correspondant à 5 mol-% B, 45 mol-% C, 50 mol-% D;
Point R correspondant à 45 mol-% B, 5 mol-% C, 50 mol-% D;
Point S correspondant à 60 mol-% B, 35 mol-% C, 5 mol-% D;
Point T correspondant à 20 mol-% B, 75 mol-% C, 5 mol-% D;
Point U correspondant à 5 mol-% B, 80 mol-% C, 15 mol-% D;

et le copolyamide a une viscosité inhérente d'environ 2,4 à 6,5 dl/g, mesurée à la température de 25°C sur des solutions de 0,5 g du polyamide dans 100 ml d'acide sulfurique à 98% en poids.

2. Articles selon la revendication 1, caractérisés en ce que —Ar— et —Ar'— sont chacun le radical p-phénylène.

3. Articles selon la revenidcation 1, caractérisés en ce que —R est le groupe —$CH_3$ ou —$OCH_3$ ou —Cl.

4. Articles selon l'une des revendications précédentes, caractérisés en ce que —R'— est le radical:

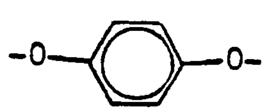 ou 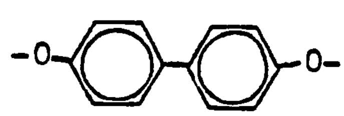

5. Articles selon l'une des revendications précédentes, caractérisés en ce que les proportions des diamines B, C et D par rapport à leur quantité totale, en pourcentages molaires, se situent dans un intervalle qui est défini par les sommets suivants:

Point Q' correspondant à 15 mol-% B, 45 mol-% C, 40 mol-% D;
Point R' correspondant à 40 mol-% B, 20 mol-% C, 40 mol-% D;
Point S' correspondant à 50 mol-% B, 40 mol-% C, 10 mol-% D;
Point T' correspondant à 15 mol-% B, 75 mol-% C, 10 mol-% D.

6. Articles selon l'une des revendications précédentes, caractérisés en ce que les proportions des

diamines B, C et D par rapport à leur quantité totale, en pourcentages molaires, se situent dans un intervalle qui est défini par les sommets suivants:

Point W correspondant à 5 mol-% B, 45 mol-% C, 50 mol-% D;
Point X correspondant à 45 mol-% B, 5 mol-% C, 50 mol-% D;
Point Y correspondant à 45 mol-% B, 40 mol-% C, 15 mol-% D;
Point Z correspondant à 5 mol-% B, 80 mol-% C, 15 mol-% D;

et le copolyamide a une viscosité inhérente d'environ 2,4 à 5,0 dl/g, mesurée à la température de 25°C sur des solutions à 0,5 g polyamide dans 100 ml d'acide sulfurique à 98% en poids.

7. Articles selon la revendication 6, caractérisés en ce que les proportions des diamines B, C et D par rapport à leur quantité totale, en pourcentages molaires, se situent dans un intervalle qui est défini par les sommets suivants:

Point W' correspondant à 15 mol-% B, 50 mol-% C, 35 mol-% D;
Point X' correspondant à 45 mol-% B, 20 mol-% C, 35 mol-% D;
Point Y' correspondant à 45 mol-% B, 40 mol-% C, 15 mol-% D;
Point Z' correspondant à 15 mol-% B, 70 mol-% C, 15 mol-% D.

8. Procédé de fabrication d'articles en copolyamides aromatiques par réaction d'un ou de plusieurs dichlorures d'acides dicarboxyliques aromatiques avec des proportions au moins sensiblement équimolaires d'un mélange de diamines aromatiques dans des solvants aprotiques, éventuellement en présence d'halogénures de métaux du groupe 1 ou 2 de la classification périodique des éléments comme solubilisants, puis neutralisation du chlorure d'hydrogène formé avec une matière basique et ensuite formation, avec la solution du polymère obtenue, de fils, fibres, pâtes de fibres, pellicules ou feuilles, procédé caractérisé en ce que les chlorures des acides dicarboxyliques sont des composés de formule:

$$Cl—CO—Ar—CO—Cl \qquad A'$$

et les diamines un mélange de:

B' $H_2N - Ar' - NH_2$

C' 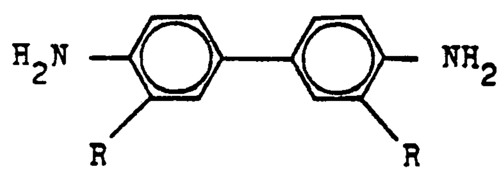

D' 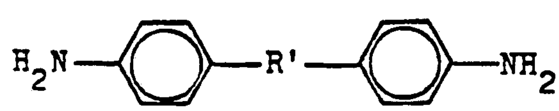

formules dans lesquelles —Ar—, —Ar'—, R— et —R'— ont les significations indiquées à la revendication 1, les proportions molaires des diamines B', C' et D' par rapport à leur quantité totale se situent dans un intervalle qui est défini par les sommets suivants:

Point Q correspondant à 5 mol-% B', 45 mol-% C', 50 mol-% D';
Point R correspondant à 45 mol-% B', 5 mol-% C', 50 mol-% D';
Point S correspondant à 60 mol-% B', 35 mol-% C', 5 mol-% D';
Point T correspondant à 20 mol-% B', 75 mol-% C', 5 mol-% D';
Point U correspondant à 5 mol-% B', 80 mol-% C', 15 mol-% D';

et on poursuit la polycondensation jusqu'à ce que le copolyamide qui se forme ait atteint une viscosité inhérente d'environ 2,4 á 6,5 dl/g, mesurée à la température de 25°C sur des solutions à 0,5 g du polyamide dans 100 ml d'acide sulfurique à 98% en poids.

9. Procédé selon la revendication 8, caractérisé en ce que les proportions molaires de diamines B', C' et D' se situent dans un intervalle qui est défini par les sommets suivants:

Point Q' correspondant à 15 mol-% B', 45 mol-% C', 40 mol-% D';
Point R' correspondant à 40 mol-% B', 20 mol-% C', 40 mol-% D';
Point S' correspondant à 50 mol-% B', 40 mol-% C', 10 mol-% D';
Point T' correspondant à 15 mol-% B', 75 mol-% C', 10 mol-% D'.

10. Procédé selon la revendication 8, caractérisé en ce que les proportions molaires des diamines B', C'

et D' se situent dans un intervalle qui est défini par les sommets suivants:

Point W correspondant à 5 mol-% B', 45 mol-% C', 50 mol-% D';
Point X correspondant à 45 mol-% B', 5 mol-% C', 50 mol-% D';
Point Y correspondant à 45 mol-% B', 40 mol-% C', 15 mol-% D';
Point Z correspondant à 5 mol-% B', 80 mol-% C', 15 mol-% D';

et on poursuit la polycondensation jusqu'à ce que le copolyamide qui se forme atteigne une viscosité inhérente d'environ 2,4 à 5,0 dl/g, mesurée à la température de 25°C sur des solutions à 0,5 g du polyamide dans 100 ml d'acide sulfurique à 98% en poids.

11. Procédé selon la revendication 10, caractérisé en ce que les proportions molaires des diamines B', C' et D' se situent dans un intervalle qui est défini par les sommets suivants:

Point W' correspondant à 15 mol-% B', 50 mol-% C', 35 mol-% D';
Point X' correspondant à 45 mol-% B', 20 mol-% C', 35 mol-% D';
Point Y' correspondant à 45 mol-% B', 40 mol-% C', 15 mol-% D';
Point Z' correspondant à 15 mol-% B', 70 mol-% C, 15 mol-% D'.

**Claims**

1. A shaped structure, in particular a filament, fiber, fiber pulp or film or sheet, from an aromatic copolyamide of the dicarboxylic acid/diamine type, wherein the shape-forming substance is copolyamide which has at least the recurring structural units of the formulae:

$$-OC-Ar-CO- \quad \text{and} \qquad (A)$$

$$-NH-Ar'-NH- \qquad (B)$$

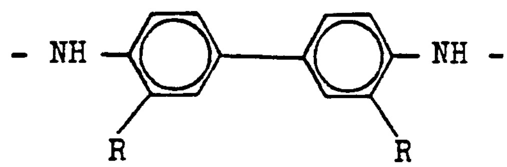

C

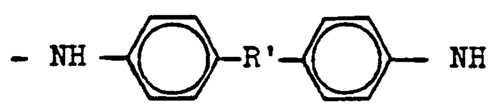

D

where

—Ar— and —Ar'— denote divalent aromatic radicals in which the valence bonds are in para- or comparable coaxial or parallel position,

—R denotes a lower alkyl radical or a lower alkoxy radical each having up to 4 carbon atoms or denotes a halogen radical and

—R'— denotes an unsubstituted or substituted methylene radical or a grouping —O—Ar—O— where —Ar— has the same structure as specified above,

and the proportions of the diamine components B, C and D relative to the total amount of diamine components in mol-% are within a domain which is defined by the following corner points:

point Q corresponds to 5 mol-% of B, 45 mol-% of C, 50 mol-% of D;
point R corresponds to 45 mol-% of B, 5 mol-% of C, 50 mol-% of D;
point S corresponds to 60 mol-% of B, 35 mol-% of C, 5 mol-% of D;
point T corresponds to 20 mol-% of B, 75 mol-% of C, 5 mol-% of D;
point U corresponds to 5 mol-% of B, 80 mol-% of C, 15 mol-% of D;

and the copolyamide has an inherent viscosity of about 2.4 to 6.5 dl/g (measured on solutions of 0.5 g of polyamide in 100 ml of 98% by weight strength $H_2SO_4$ at 25°C).

2. The shaped structure as claimed in claim 1, wherein —Ar— and —Ar'— each denote a 1,4-phenylene radical.

3. The shaped structure as claimed in claim 1, wherein —R has the meaning —$CH_3$, $OCH_3$ or —Cl.

4. The shaped structure as claimed in any one of the preceding claims, wherein —R'— has the meaning

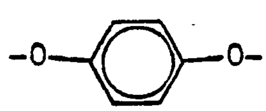

or

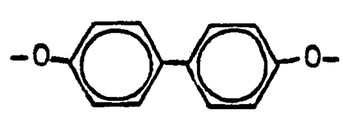

5. The shaped structure as claimed in any one of the preceding claims, wherein the proportions of the diamine components B, C and D relative to the total amount of diamine components in mol-% are within a domain which is defined by the following corner points:

point Q′ corresponds to 15 mol-% of B, 45 mol-% of C, 40 mol-% of D;
point R′ corresponds to 40 mol-% of B, 20 mol-% of C, 40 mol-% of D;
point S′ corresponds to 50 mol-% of B, 40 mol-% of C, 10 mol-% of D;
point T′ corresponds to 15 mol-% of B, 75 mol-% of C, 10 mol-% of D.

6. A shaped structure as claimed in any one of the preceding claims, wherein the proportions on the diamine components B, C and D relative to the total amount of the diamine components in mol-% are within a domain which is defined by the following corner points:

point W corresponds to 5 mol-% of B, 45 mol-% of C, 50 mol-% of D;
point X corresponds to 45 mol-% of B, 5 mol-% of C, 50 mol-% of D;
point Y corresponds to 45 mol-% of B, 40 mol-% of C, 15 mol-% of D;
point Z corresponds to 5 mol-% of B, 80 mol-% of C, 15 mol-% of D;

and the copolyamide has an inherent viscosity of about 2.4 to 5.0 dl/g (measured on solutions of 0.5 g of polyamide in 100 ml of 98% by weight strength $H_2SO_4$ at 25°C).

7. A shaped structure as claimed in claim 6, wherein the proportions of the diamine component B, C and D relative to the total amount of diamine component in mol-% are within a domain which is defined by the following corner points:

point W′ corresponds to 15 mol-% of B, 50 mol-% of C, 35 mol-% of D;
point X′ corresponds to 45 mol-% of B, 20 mol-% of C, 35 mol-% of D;
point Y′ corresponds to 45 mol-% of B, 40 mol-% of C, 15 mol-% of D;
point Z′ corresponds to 15 mol-% of B, 70 mol-% of C, 15 mol-% of D.

8. A process for preparing shaped structures from aromatic copolyamides by reacting at least one aromatic dicarbonyl dichloride with at least substantially equimolar amounts of a mixture of aromatic diamines in aprotic solvents in the presence or absence of metal halides of group 1 or 2 of the periodic table as solubilizers, neutralizing the resultant HCl by addition of substances acting as bases and subsequently shaping the resultant polymer solution into filaments, fibers, fiber pulp, films or sheets, which comprises using as dicarbonyl chlorides compounds of the formula

$$Cl—CO—Ar—CO—Cl \qquad A'$$

and as diamines a mixture of

B′ $H_2N - Ar' - NH_2$

C′ 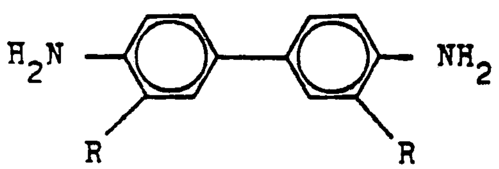

D′ 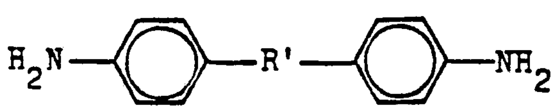

wherein —Ar—, —Ar′—, R— and —R′— have the above-mentioned meaning, the molar fractions of diamines B′, C′ and D′ relative to the total number of moles of the diamines are within a domain which is defined by the following corner points:

point Q corresponds to 5 mol-% of B′, 45 mol-% of C′, 50 mol-% of D′;
point R corresponds to 45 mol-% of B′, 5 mol-% of C′, 50 mol-% of D′;
point S corresponds to 60 mol-% of B′, 35 mol-% of C′, 5 mol-% of D′;
point T corresponds to 20 mol-% of B′, 75 mol-% of C′, 5 mol-% of D′;
point U corresponds to 5 mol-% of B′, 80 mol-% of C′, 15 mol-% of D′;

and continuing the polycondensation until the resultant copolyamide has an inherent viscosity of about 2,4 to 6.5 dl/g (measured on solutions of 0.5 g of polyamide in 100 ml of 98% by weight strength sulfuric acid at 25°C).

9. The process as claimed in claim 8, wherein the molar fractions of diamines B′, C′ and D′ relative to the total number of moles of the diamines are within a domain which is defined by the following corner points:

point Q′ corresponds to 15 mol-% of B′, 45 mol-% of C′, 40 mol-% of D′;
point R′ corresponds to 40 mol-% of B′, 20 mol-% of C′, 40 mol-% of D′;
point S′ corresponds to 50 mol-% of B′, 40 mol-% of C′, 10 mol-% of D′;
point T′ corresponds to 15 mol-% of B′, 75 mol-% of C′, 10 mol-% of D′.

10. The process as claimed in claim 8, wherein the molar fractions of the diamines B′, C′ and D′ relative to the total number of moles of the diamines are within a domain which is defined by the following corner points:

point W corresponds to 5 mol-% of B′, 45 mol-% of C′, 50 mol-% of D′;
point X corresponds to 45 mol-% of B′, 5 mol-% of C′, 50 mol-% of D′;
point Y corresponds to 45 mol-% of B′, 40 mol-% of C′, 15 mol-% of D′;
point Z corresponds to 5 mol-% of B′, 80 mol-% of C′, 15 mol-% of D′;

and the polycondensation is continued until the copolyamide produced has an inherent viscosity of about 2.4 to 5.0 dl/g (measured on solutions of 0.5 g of polyamide in 100 ml of 98% by weight strength sulfuric acid at 25°C).

11. The process as claimed in claim 10, wherein the molar fractions of the diamines B′, C′ and D′ relative to the total number of moles of the diamines are within a domain which is defined by the following corner points:

point W′ corresponds to 15 mol-% of B′, 50 mol-% of C′, 35 mol-% of D′;
point X′ corresponds to 45 mol-% of B′, 20 mol-% of C′, 35 mol-% of D′;
point Y′ corresponds to 45 mol-% of B′, 40 mol-% of C′, 15 mol-% of D′;
point Z′ corresponds to 15 mol-% of B′, 70 mol-% of C′, 15 mol-% of D′.

FIG.1

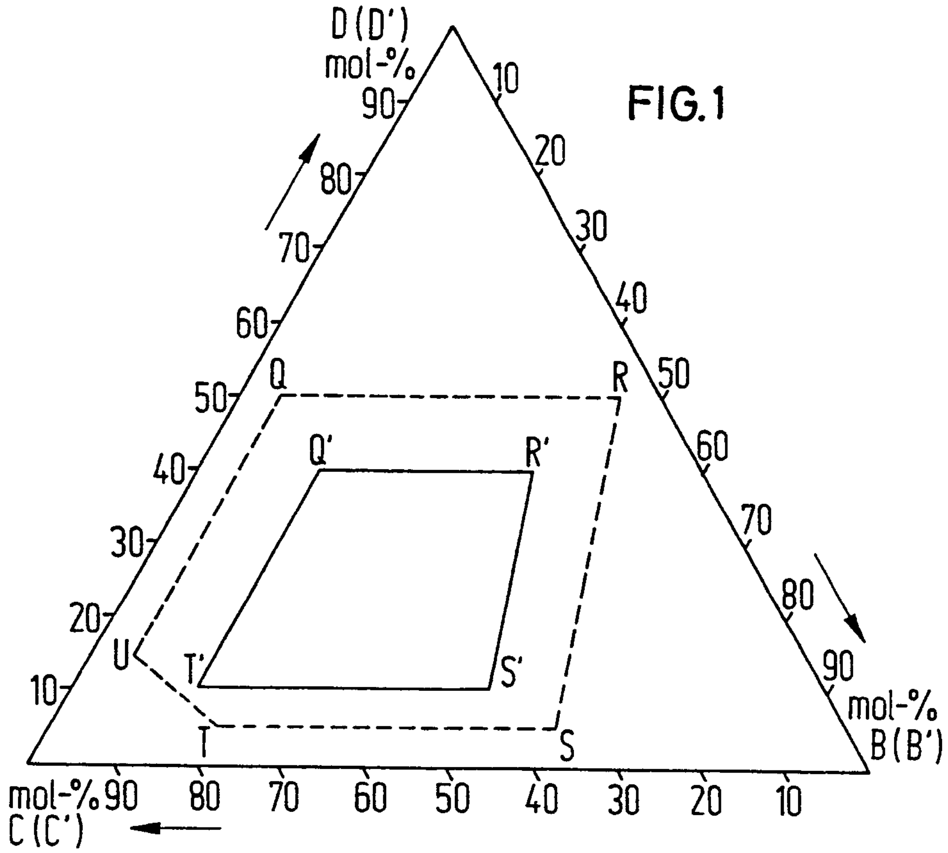

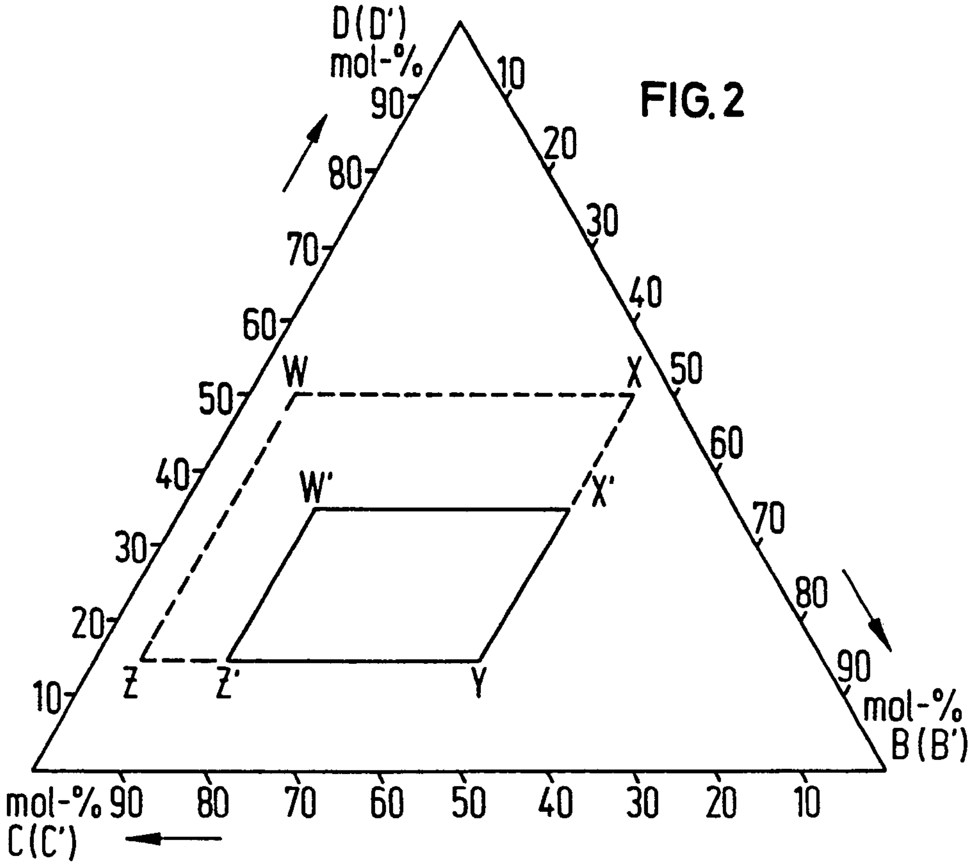
D(D')
mol-%
90
80
70
60
50
40
30
20
10
10
20
30
40
50
60
70
80
90
mol-%
B(B')
mol-% 90 80 70 60 50 40 30 20 10
C(C')
W
X
W'
X'
Z
Z'
Y

FIG. 2